# EUROPÄISCHE PATENTSCHRIFT

(11) **EP 2 045 481 B1**
(45) Veröffentlichungstag und Bekanntmachung des Hinweises auf die Patenterteilung: **09.11.2011**
(21) Anmeldenummer: 08163367.9
(22) Anmeldetag: 01.09.2008
(51) Int. Cl.: F16D 25/08

(54) **Betätigungseinrichtung für eine Fahrzeugkupplung**
Actuation device for a vehicle coupling
Dispositif d'actionnement pour un embrayage de véhicule

(30) Priorität: 04.10.2007 DE 102007047514
(43) Veröffentlichungstag der Anmeldung: 08.04.2009
(73) Patentinhaber: ZF Friedrichshafen AG, 88038 Friedrichshafen (DE)
(72) Erfinder: Ester, Barbara, 97421 Schweinfurt (DE)

(56) Entgegenhaltungen:
- WO-A1-2007/101419
- DE-A1- 4 412 734
- DE-A1- 10 349 171
- DE-A1-102004 032 038
- DE-A1-102004 049 804
- US-A- 5 779 280
- US-A1- 2005 034 954

## Beschreibung

Die Erfindung betrifft eine Betätigungseinrichtung für eine Fahrzeugkupplung gemäß dem Oberbegriff von Patentanspruch 1.

Die DE 103 49 171 A1 beschreibt eine Betätigungseinrichtung für eine Fahrzeugkupplung, bei der ein Arbeitsraum in einem Zylinder über einen Druckmediumanschluss willkürlich füllbar ist. Dafür verfügt der Zylinder über eine Anschlussöffnung in einem Boden. Die Anschlussöffnung im Boden steht in Überdeckung mit einer Aussparung in einer Anschlussplatte, über die die Betätigungseinrichtung im Antriebsstrang fixiert wird. Die DE 103 49 171 A1 enthält keine Hinweise, wie die Druckmediumübertragung exakt ausgeführt ist.

Die Aufgabe der vorliegenden Erfindung besteht darin, eine möglichst einfache und platzsparende Anschlusstechnik für einen Druckmediumanschluss im Bodenbereich eines Zylinders der Betätigungseinrichtung zu schaffen, welche auch bei auftretenden Fertigungstoleranzen eine sichere Abdichtung gewährleistet.

Erfindungsgemäß wird die Aufgabe dadurch gelöst, dass die Anschlussplatte ein Anschlusselement für ein Befestigungsmittel trägt, das einen Druckmittelanschluss an der Betätigungseinrichtung fixiert. Dabei weist die Anschlussplatte mindestens eine Öffnung auf, durch die mindestens ein Stützelement des Druckmittelanschlusses auf den Boden des Zylinders durchgreift.

Der große Vorteil der Erfindung besteht darin, dass der Zylinder keine Öffnungen für ein Befestigungsmittel enthalten muss und entsprechend das Leckagerisiko sehr klein ist. Zudem besteht der wesentliche Vorteil dieser Ausführung darin, dass die unvermeidliche Fertigungstoleranz in der Materialstärke der Anschlussplatte keinen Einfluss auf die Vorspannung der Dichtfläche zwischen dem Druckmittelanschluss und dem Boden ausübt.

In weiterer Ausgestaltung der Erfindung ist vorgesehen, dass das Anschlusselement als eine Gewindehülse ausgeführt ist.

Bei einer ersten Variante ist die Gewindehülse als eine Aushalsung der Anschlussplatte ausgeführt. An der Anschlussplatte müssen keine Anschweißungen oder ähnlich aufwändigen Befestigungstechniken vorgenommen werden. Die Aushalsung kann schon direkt beim Ausstanzen der Anschlussplatte als ein Bearbeitungsschritt ablaufen.

Das Stützelement ist mit Vorteil sichelförmig ausgeführt, um eine genaue Ausrichtung zu bieten. Des Weiteren wird die Flächenbelastung am Boden des Zylinders minimiert.

Der Druckmittelanschluss weist einen Schraubflansch auf, in dem Befestigungshülsen fixiert sind, die die Stützelemente aufweisen. Für den Druckmittelanschluss könnte ein Kunststoff verwendet werden, da die Befestigungshülsen die Vorspannkräfte der Befestigungsmittel aufnehmen.

Anhand der folgenden Figurenbeschreibung soll die Erfindung näher erläutert werden.

Es zeigt:
- Fig. 1: Schnittdarstellung durch eine Betätigungseinrichtung
- Fig. 2: Stützelement als Einzelteil
- Fig. 3: Seitenansicht der Anschlussplatte
- Fig. 4: Alternativausführung zur Fig. 1, die nicht unter die Erfindung fällt
- Fig. 5: Seitenansicht zur Fig. 4

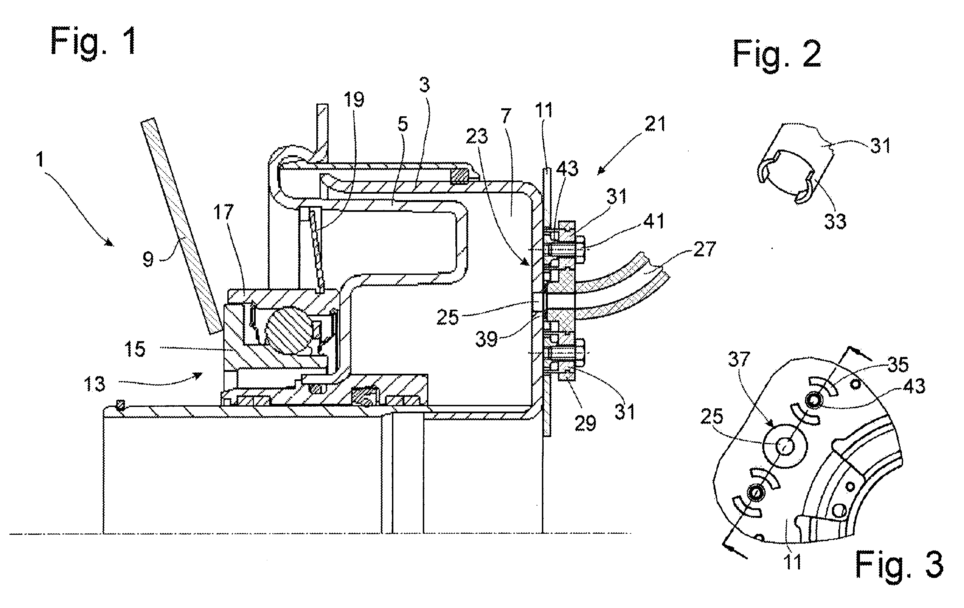

Die Figur 1 zeigt eine Schnittdarstellung durch eine Betätigungseinrichtung 1 für eine Reibungskupplung. Die Betätigungseinrichtung umfasst einen mit einem Druckmedium, z. B. einem Gas oder einem hydraulischen Medium, willkürlich versorgbaren Zylinder 3 in dem ein Kolben 5 in Abhängigkeit des Füllstandes des Druckmediums in einem vom Kolben und dem Zylinder gebildeten Arbeitsraum 7 eine axiale Betriebsbewegung ausübt, die auf ein Übertragungselement der nicht dargestellten Reibungskupplung, in diesem Fall einer Membranfeder 9, eine Öffnungskraft ausübt. Der Zylinder ist mit einer Anschlussplatte 11 fest verbunden und über diese ortsfest zu einer nicht dargestellten koaxial verlaufenden Getriebewelle an einem Getriebegehäuse befestigt. Die Membranfeder dreht sich, da sie über ein Kupplungsgehäuse mit der Kurbelwelle eines Motors verbunden ist, stets mit der Kurbelwellendrehzahl. Deshalb ist zwischen der Membranfeder und dem Kolben eine Lagerstelle 13 angeordnet, die von einem Wälzlager mit einem Innenlagerring 15 und einem Außenlagerring 17 gebildet wird, die sich in Umfangsrichtung relativ zueinander verdrehen können. Der Außenlagerring wird von einer Vorspannfeder 19 gegen den Kolben gedrückt. Der Innenlagering liegt an der Membranfeder an. Aufgrund dieser Anordnung kann ein in Grenzen vorhandener Versatz zwischen der Membranfeder und dem Kolben durch eine Selbstzentrierung ausgeglichen werden.

Der Arbeitsraum 7 wird über einen Druckmittelanschluss 21 versorgt, der an einer Außenseite eines Bodens 23 des Zylinders fixiert ist. In dem Boden 23 ist eine Anschlussöffnung 25 ausgeführt, die in Überdeckung mit einem Anschlusskanal 27 des Druckmittelanschlusses 21 steht. Der Druckmittelanschluss 21 verfügt über einen Schraubflansch 29 in dem metallische Befestigungshülsen 31 fixiert sind. Die Befestigungshülsen, Fig. 2, weisen sichelförmige Stützelemente auf 33 auf, die ebenfalls sichelförmige Öffnungen 35 in der Anschlussplatte 11 durchgreifen, Fig. 3, und sich direkt auf der Außenseite des Bodens 23 abstützen. In der Anschlussplatte 11 ist eine Zentrieröffnung 37 für den Befestigungsflansch 29 inklusive mindestens einer Dichtung 39 vorhanden. Der Befestigungsflansch 29 wird von Schrauben 41, die in den Befestigungshülsen verlaufen, an der Anschlussplatte 11 fixiert. Die Anschlussplatte 11 trägt ein Anschlusselement in der Bauform einer Gewindehülse 43, in die die Schrauben 41 eingreifen. Die Gewindehülsen 43 sind als eine Aushalsung der Anschlussplatte 11 gefertigt.

Bei der Herstellung und Montage der Betätigungseinrichtung 1 wird in den Boden 23 des Zylinders 3 die Anschlussöffnung eingebracht. Auch die Anschlussplatte wird mit allen Öffnungen 35; 37 gefertigt, wobei die Aushalsungen 43 in die dem Boden 23 abgewandte Richtung weisen. Wenn der Druckmittelanschluss mit der Dichtung 39 bestückt und in die Zentrieröffnung gedrückt wird, behält der Druckmittelanschluss 27 diese Position und kann über die in die Gewindehülsen 43 eingreifenden Schrauben 41 druckdicht vorgespannt werden.

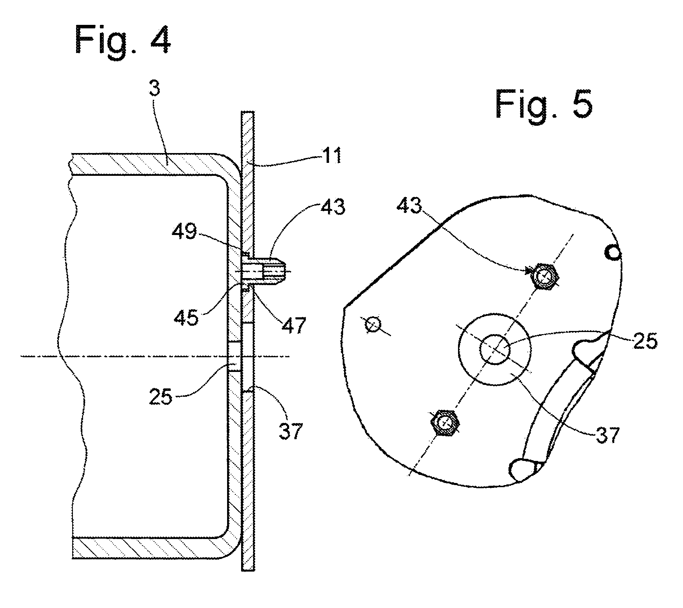

Eine nicht unter die Erfindung fallende Alternativvariante nach Fig. 4 zeichnet sich dadurch aus, dass die Gewindehülse 43 als ein zur Anschlussplatte 11 und dem Zylinder 3 unabhängiges Bauteil ausgeführt ist, das über eine Axialsicherung in der Form eines Bundes 45 zwischen dem Boden des Zylinders und der Anschlussplatte 11 axial gekammert ist. In der Anschlussplatte sind entsprechende Durchgangsöffnungen 47 für die Gewindehülsen 43 ausgeführt, Fig. 5. Im Bereich der Durchgangsöffnungen 47 weist die Anschlussplatte 11 jeweils eine Tasche 49 auf, die der Aufnahme des Bundes der Gewindehülse 43 dient. Die Tasche kann auch im Boden 23 des Zylinders eingeprägt sein.

Zur Montage wird die mit allen Öffnungen und Taschen gefertigte Anschlussplatte 11 mit den Gewindehülsen 43 bestückt. Anschließend fixiert man die Anschlussplatte am Zylinder 3., wobei der Bund 45 jeder Gewindehülse in Richtung des Bodens 23 weist. Danach wird ein Druckmittelanschluss gemäß der Fig. 1 auf die Anschlussplatte 11 aufgesetzt. Die Gewindehülse 43 greifen in die Befestigungshülsen 31 ein und nehmen die Befestigungsschrauben 41 auf. Die Durchgangsöffnung 47 ist als Vieleck ausgeführt, in das die entsprechende geformte Gewindehülse formschlüssig eingreift, so dass ein Mitdrehen der Gewindehülse 43 ausgeschlossen werden kann, wenn ein die Befestigungsschrauben 41 eingedreht werden.

## Patentansprüche

1. Betätigungseinrichtung (1) für eine Fahrzeugkupplung, umfassend einen Zylinder (3) mit einem Boden (23), wobei der Zylinder (3) einen Arbeitsraum (7) begrenzt, in dem ein Kolben (5) in Abhängigkeit des Druckniveaus eine Betriebsbewegung ausführt, wobei der Arbeitsraum (7) über eine Anschlussöffnung (25) im Boden und einer Aussparung (37) in einer zylinderseitig befestigten Anschlussplatte (11) mit Druckmedium versorgt wird,
**dadurch gekennzeichnet,**
**dass** die Anschlussplatte (11) ein Anschlusselement (43) für ein Befestigungsmittel (41) trägt, das einen Druckmittelanschluss (21) an der Betätigungseinrichtung (1) fixiert, wobei die Anschlussplatte (11) mindestens eine Öffnung (35) aufweist, durch die mindestens ein Stützelement (33) des Druckmittelanschlusses (21) auf den Boden (23) des Zylinders (3) durchgreift.

2. Betätigungseinrichtung nach Anspruch 1,
**dadurch gekennzeichnet,**
**dass** das Anschlusselement (43) als eine Gewindehülse (43) ausgeführt ist.

3. Betätigungseinrichtung nach Anspruch 2,
**dadurch gekennzeichnet,**
**dass** die Gewindehülse (43) als eine Aushalsung der Anschlussplatte (11) ausgeführt ist.

4. Betätigungseinrichtung nach einem der Ansprüche 1-3,
**dadurch gekennzeichnet,**
**dass** das Stützelement (33) sichelförmig ausgeführt ist.

5. Betätigungseinrichtung nach einem der Ansprüche 1-4,
**dadurch gekennzeichnet,**
**dass** der Druckmittelanschluss (21) einen Schraubflansch (29) aufweist, in dem Befestigungshülsen (31) fixiert sind, die die Stützelemente (33) aufweisen.

## Claims

1. Actuation device (1) for a vehicle coupling, comprising a cylinder (3) with a base (23), wherein the cylinder (3) bounds a working chamber (7) in which a piston (5) executes an operating movement depending on the pressure level, wherein the working chamber (7) is supplied with pressure medium via a connecting opening (25) in the base and a cutout (37) in a connecting plate (11) fastened on the cylinder side, **characterized in that** the connecting plate (11) bears a connecting element (43) for a fastening means (61) which fixes a pressure medium connection (21) to the actuation device (1), the connecting plate (11) having at least one opening (35) through which at least one supporting element (33) of the pressure medium connection (21) reaches onto the base (23) of the cylinder (3).

2. Actuation device according to Claim 1, **characterized in that** the connecting element (43) is designed as a threaded sleeve (43).

3. Actuation device according to Claim 2, **characterized in that** the threaded sleeve (43) is designed as a necked formation of the connecting plate (11).

4. Actuation device according to one of Claims 1 - 3, **characterized in that** the supporting element (33) is of sickle-shaped design.

5. Actuation device according to one of Claims 1 - 4, **characterized in that** the pressure medium connection (21) has a screw flange (29) in which fastening sleeves (31) containing the supporting elements (33) are fixed.

## Revendications

1. Dispositif d'actionnement (1) pour un embrayage de véhicule, comprenant un cylindre (3) avec un fond (23), le cylindre (3) limitant un espace de travail (7) dans lequel un piston (5) effectue un déplacement de travail en fonction du niveau de pression, l'espace de travail (7) étant alimenté en fluide sous pression par le biais d'une ouverture de raccordement (25) dans le fond et d'un évidement (37) dans une plaque de raccordement (11) fixée du côté du cylindre,
**caractérisé en ce que**
la plaque de raccordement (11) porte un élément de raccordement (43) pour un moyen de fixation (41), qui fixe un raccord de fluide sous pression (21) sur le dispositif d'actionnement (1), la plaque de raccordement (11) présentant au moins une ouverture (35) à travers laquelle vient en prise au moins un élément de support (33) du raccord de fluide sous pression (21) sur le fond (23) du cylindre (3).

2. Dispositif d'actionnement selon la revendication 1,
**caractérisé en ce que**
l'élément de raccordement (43) est réalisé sous forme de douille filetée (43).

3. Dispositif d'actionnement selon la revendication 2,
**caractérisé en ce que**
la douille filetée (43) est réalisée sous forme de col de la plaque de raccordement (11).

4. Dispositif d'actionnement selon l'une quelconque des revendications 1 à 3,
**caractérisé en ce que**
l'élément de support (33) est réalisé en forme de croissant.

5. Dispositif d'actionnement selon l'une quelconque des revendications 1 à 4,
**caractérisé en ce que**
le raccord de fluide sous pression (21) présente une bride de vissage (29), dans laquelle sont fixées des douilles de fixation (31), qui présentent les éléments de support (33).
